# EUROPEAN PATENT APPLICATION

(11) **EP 3 376 034 A1**
(43) Date of publication of application: **19.09.2018**
(21) Application number: 18161399.3
(22) Date of filing: 13.03.2018
(51) Int. Cl.: F04C 28/28, F04C 18/16, F04C 29/06

(54) **PUMP APPARATUS WITH REMOTE MONITORING FUNCTION AND PUMP APPARATUS MONITORING SYSTEM**

(30) Priority: 15.03.2017 TW 106108504
(71) Applicant: Atai Fuji Motor Co., Ltd., 338 Taoyuan City (TW)
(72) Inventor: Sun, Chi-Feng, 330 Taoyuan City (TW); Lin, Ching-Yuan, 242 New Taipei City (TW)
(74) Representative: Becker Kurig Straus

(57) **Abstract**

A pump apparatus (1) and a pump apparatus monitoring system (1000) are disclosed. The pump apparatus monitoring system (1000) includes a cloud server (3), a remote electronic device (5), a near end electronic device (2) and a pump apparatus (1). The pump apparatus (1) includes a control module (15) and at least one parameter sensor (16). The parameter sensor (16) is for sensing at least one parameter of the pump apparatus (1). The control module (15) transmits the at least one parameter to the near end electronic device (2). The near end electronic device (2) uploads the at least one parameter to the cloud server (3) via a network (4). The remote electronic device (5) downloads the at least one parameter from the cloud server (3) via the network (4). Accordingly, staff at the remote end is able to get parameters of the pump apparatus (1) by the remote electronic device (5), so as to adjust the pump apparatus (1).

## Description

### Field of the Invention

The present invention relates to a pump apparatus and a pump apparatus monitoring system according to the pre-characterizing clauses of claims 1 and 11.

### Background of the Invention

With the development of global economy, a company or an industry sets the operation/ manufacturing center and the research/development center in different locations. For example, in pump industry, the research/development center is often settled in the advanced country, while the operation/ manufacturing center is settled in the country with low labor costs. The aforesaid company operating arrangement for the pump industry causes difficulty in transmitting pump parameters when the pump apparatus is in operation from the operation/ manufacturing center to the research/development center due to the distance therebetween. Accordingly, the research/development staff has difficulty in receiving the pump parameters in time for dealing with problems for the pump apparatus in operation. Thus, it becomes an issue to design a pump apparatus with remote monitoring function and a pump apparatus monitoring system therewith in the pump industry.

### Summary of the Invention

This in mind, the present invention aims at providing a pump apparatus and a related pump apparatus monitoring system with remote monitoring function.

This is achieved by a pump apparatus and a related pump apparatus monitoring system according to claims 1 and 11. The dependent claims pertain to corresponding further developments and improvements.

As will be seen more clearly from the detailed description following below, a pump apparatus with remote monitoring function is disclosed. The pump apparatus includes a rotor housing, an intake pipe, an exhaust pipe, a pump rotor, a control module and at least one parameter sensor. A pump chamber is formed in the rotor housing. The intake pipe communicates with the pump chamber and a chamber body. The exhaust pipe communicates with the pump chamber. The pump rotor is disposed in the pump chamber. The pump rotor inhales a gas from the chamber body into the pump chamber via the intake pipe and exhausts the gas inhaled into the pump chamber to the exhaust pipe. The control module is disposed on the rotor housing. The at least one parameter sensor is coupled to the control module and for sensing at least one parameter of the pump apparatus. The control module establishes connection with a near end electronic device and transmits the at least one parameter to the near end electronic device.

According to an embodiment, a pump apparatus monitoring system includes a cloud server, at least one remote electronic device, a near end electronic device and a pump apparatus. The at least one remote electronic device is capable of establishing connection with the cloud server via a network. The near end electronic device is capable of establishing connection with the cloud server via the network. The pump apparatus includes at least one parameter sensor and a control module. The at least one remote electronic device is capable of establishing connection with the cloud server via a network. The near end electronic device is capable of establishing connection with the cloud server via the network. The pump apparatus includes at least one parameter sensor and a control module. The at least one parameter sensor is for sensing at least one parameter of the pump apparatus. The control module is coupled to the at least one parameter sensor. The control module transmits the at least one parameter sensed by the at least one parameter sensor to the near end electronic device, so that the near end electronic device uploads the at least one parameter to the cloud server via the network and the at least one remote electronic device downloads the at least one parameter from the cloud server via the network.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings, thereof
FIG. 1 is a schematic diagram of a pump apparatus according to an embodiment of the present invention,
FIG. 2 is an internal diagram of the pump apparatus according to the embodiment of the present invention,
FIG. 3 is a side view of the pump apparatus according to the embodiment of the present invention,
FIG. 4 is a functional block diagram of a pump apparatus monitoring system according to the embodiment of the present invention,
FIG. 5 is a functional block diagram when the pump apparatus monitoring system uploads the parameter according to the embodiment of the present invention, and
FIG. 6 is a functional block diagram when the pump apparatus monitoring system downloads the parameter according to the embodiment of the present invention.

### Detailed Description

In the following detailed description of the embodiments, reference is made to the accompanying drawings which form a part hereof, and in which is shown by way of illustration specific embodiments in which the invention may be practiced. In this regard, directional terminology, such as "top," "bottom," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless limited otherwise, the terms "connected," and "installed" and variations thereof herein are used broadly and encompass direct and indirect connections and installations. Accordingly, the drawings and descriptions will be regarded as illustrative in nature and not as restrictive.

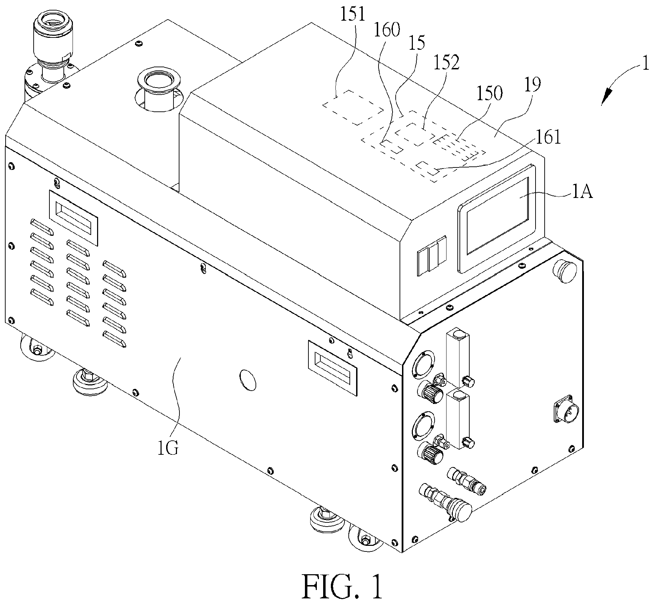

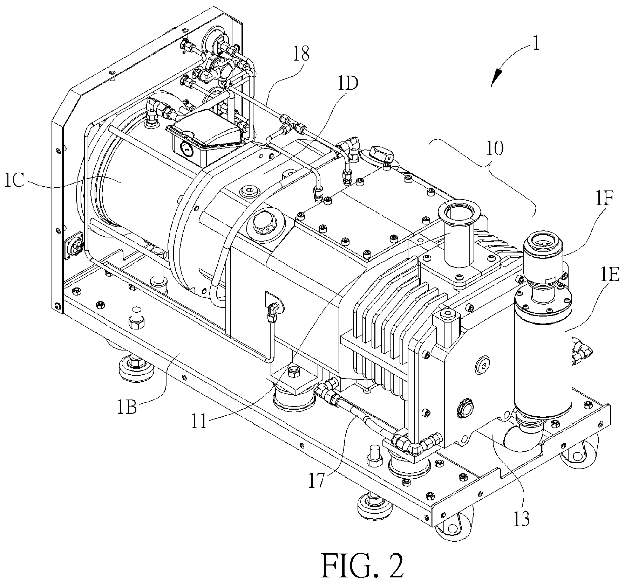

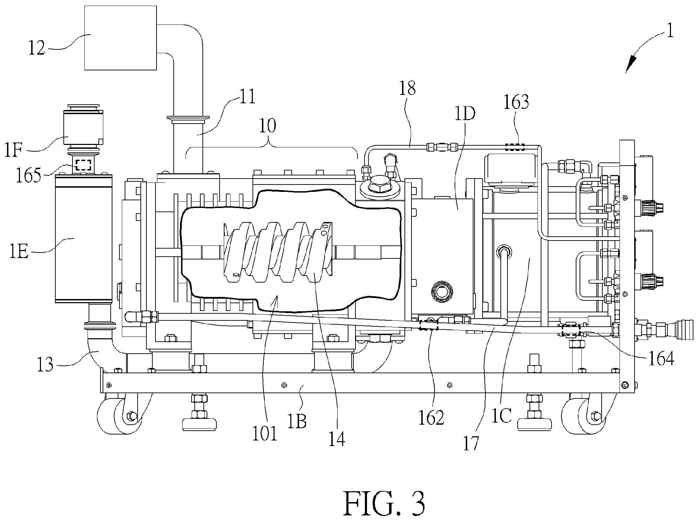

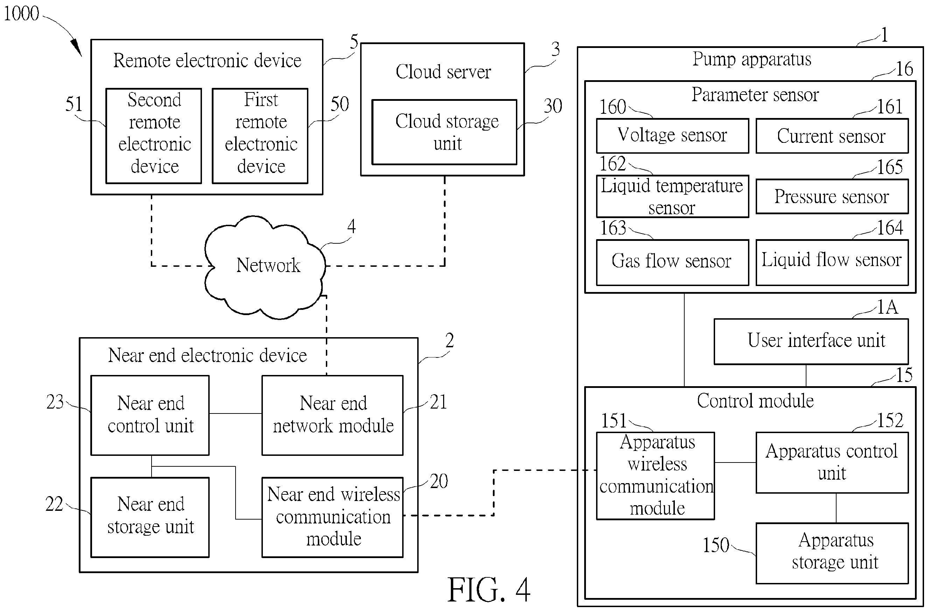

Please refer to FIG. 1 to FIG. 4. FIG. 1 is a schematic diagram of a pump apparatus 1 according to an embodiment of the present invention. FIG. 2 is an internal diagram of the pump apparatus 1 according to the embodiment of the present invention. FIG. 3 is a side view of the pump apparatus 1 according to the embodiment of the present invention. FIG. 4 is a functional block diagram of a pump apparatus monitoring system 1000 according to the embodiment of the present invention. As shown in FIG. 1 to FIG. 4, the pump apparatus monitoring system 1000 includes a pump apparatus 1, a near end electronic device 2, a cloud server 3 and at least one remote electronic device 5. The at least one remote electronic device 5 and the near end electronic device 2 are able to establish connection with the cloud server 3 via a network 4. In this embodiment, the near end electronic device 2 can be a smart handheld electronic device, such as a smart phone, and the remote electronic device 5 can be a desktop computer, a cell phone and so on. Furthermore, the pump apparatus 1 can be a dry pump, but the present invention is not limited thereto. It should be noticed that the near end electronic device 2 is held by the staff in operation with the pump apparatus 1, and the remote electronic device 5 is held by the staff located in a remote position relative to the pump apparatus 1, such as a research and design member.

Furthermore, the pump apparatus 1 includes a rotor housing 10, an intake pipe 11, an exhaust pipe 13, a pump rotor 14, a control module 15, at least one parameter sensor 16, a liquid pipe 17 and a gas pipe 18. A pump chamber 101 is formed in the rotor housing 10. The intake pipe 11 communicates with the pump chamber 101 and a chamber body 12. The exhaust pipe 13 communicates with the pump chamber 101. The pump rotor 14 is disposed in the pump chamber 101. The pump rotor 14 is for inhaling a gas from the chamber body 12 into the pump chamber 101 via the intake pipe 11 and exhausting the gas inhaled into the pump chamber 101 to the exhaust pipe 13, i.e., the pump apparatus 1 is for vacuuming the chamber body 12. The control module 15 is disposed on the rotor housing 10. The at least one parameter sensor 16 is coupled to the control module 15 and for sensing at least one parameter of the pump apparatus 1. The liquid pipe 17 is for providing a coolant, and the gas pipe 18 is for providing a purge, so as to cool down the pump apparatus 1 and maintain cleanliness in the pump chamber 101.

In addition, the pump apparatus 1 further includes a control module casing 19, an outer casing 1G, a base 1B, an activating member 1C, a transmission mechanism 1D, a muffler 1E and a check valve 1F. The outer casing 1G covers inner components of the pump apparatus 1. The control module casing 19 is disposed on the outer casing 1G and for containing the control module 15. The activating member 1C and the transmission mechanism 1D are disposed on the base 1B. The activating member 1C is for outputting a torque. The transmission mechanism 1D is for transmitting the torque output by the activating member 1C to the pump rotor 14. Accordingly, the activating member 1C is able to drive the pump rotor 14 via the transmission mechanism 1D. In this embodiment, the activating member 1C can be a motor, and the transmission mechanism 1D can be a gear set. The muffler 1E is connected to the exhaust pipe 13, and the check valve 1F is connected to the muffler 1E. The muffler 1E is for muffling a noise generated by the gas as exhausted out of the pump chamber 10 via the exhaust pipe 13, and the check valve 1F is for preventing the gas exhausted out of the pump chamber 101 from reflux.

In this embodiment, the at least one parameter sensor 16 can include a voltage sensor 160, a current sensor 161, a liquid temperature sensor 162, a gas flow sensor 163, a liquid flow sensor 164 and a pressure sensor 165. The voltage sensor 160 and the current sensor 161 are disposed in the control module 15. The voltage sensor 160 is for sensing a voltage of the pump apparatus 1, and the current sensor 161 is for sensing a current of the pump apparatus 1. The liquid temperature sensor 162 and the liquid flow sensor 164 are disposed on the liquid pipe 17. The liquid temperature sensor 162 is for sensing a liquid temperature of the coolant, and the liquid flow sensor 164 is for sensing a flow rate of the coolant. The gas flow sensor 163 is disposed on the gas pipe 18 and for sensing a flow rate of the purge. The pressure sensor 165 is disposed on the check valve 1F and for sensing a pressure of the gas. In other words, the at least one parameter sensed by the at least one parameter sensor 16 can include the voltage, the current, the liquid temperature of the coolant, the flow rate of the coolant, the flow rate of the purge and the pressure of the gas, but the present invention is not limited thereto.

In addition, the near end electronic device 2 includes a near end wireless communication module 20, a near end network module 21, a near end storage unit 22 and a near end control unit 23. The near end control unit 23 is coupled to the near end wireless communication module 20, the near end network module 21 and the near end storage unit 22. The near end storage unit 22 is for storing the at least one parameter. The near end network module 21 is for communicating with the network 4. Accordingly, the near end electronic device 2 is capable of establishing connection with the cloud server 3 via the network 4. Furthermore, the control module 15 of the pump apparatus 1 includes an apparatus storage unit 150, an apparatus wireless communication module 151 and an apparatus control unit 152. The apparatus control unit 152 is coupled to the apparatus storage unit 150 and the apparatus wireless communication module 151, and the apparatus storage unit 150 is for storing the at least one parameter sensed by the at least one parameter sensor 16.

Furthermore, the apparatus wireless communication module 151 is for establishing the connection with the near end wireless communication module 20. Accordingly, the control module 15 of the pump apparatus 1 is able to establish the connection with the near end electronic device 2. In this embodiment, the apparatus wireless communication module 151 can be a Wireless Fidelity (Wi-Fi) module, and the Wireless Fidelity (Wi-Fi) module (i.e., the apparatus wireless communication module 151) can be disposed in the control module casing 19, but the present invention is not limited thereto. For example, the apparatus wireless communication module 151 can independently disposed out of the pump apparatus 1. As for which one of the aforesaid designs is adopted, it depends on practical demands. Furthermore, the pump apparatus 1 further includes a user interface unit 1A, and the cloud server 3 has a cloud storage unit 30. The user interface unit 1A is installed on the control module casing 19 and for displaying the at least one parameter, so that the operators observe the at least one parameter by the user interface unit 1A when the pump apparatus 1 is in operation. The cloud storage unit 30 is for storing the at least one parameter stored in the cloud server 3 and uploaded by the near end electronic device 2.

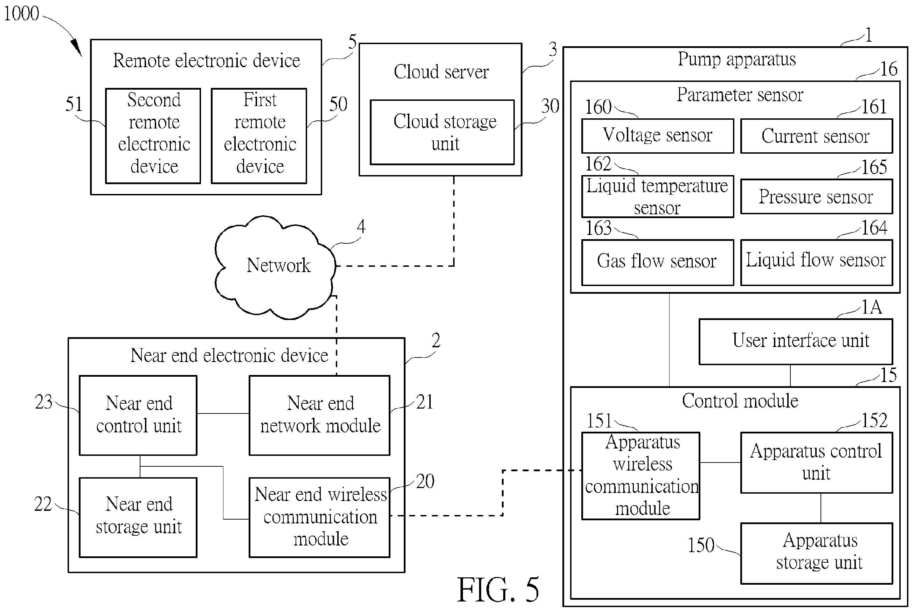

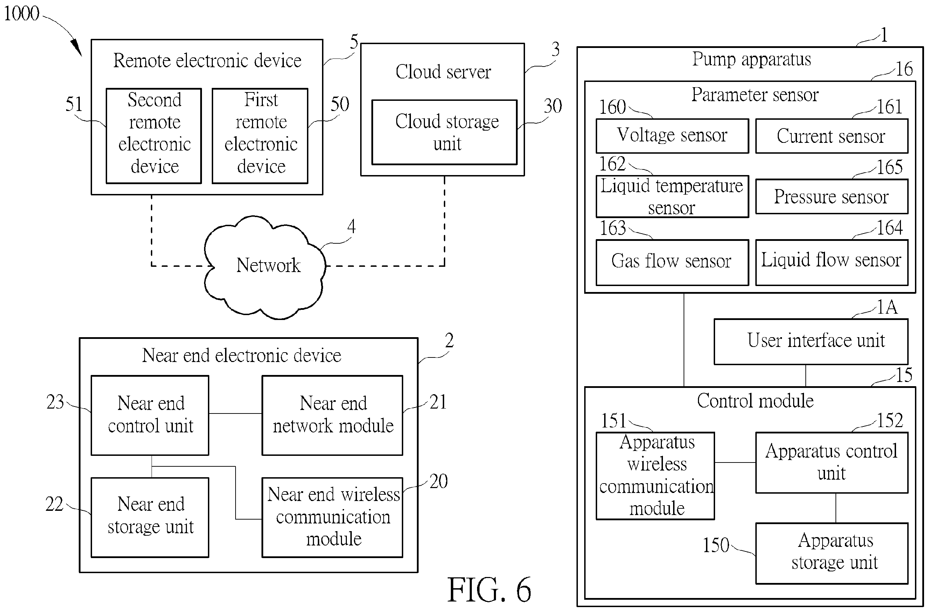

Please refer to FIG. 5 and FIG. 6. FIG. 5 is a functional block diagram when the pump apparatus monitoring system 1000 uploads the parameter according to the embodiment of the present invention. FIG. 6 is a functional block diagram when the pump apparatus monitoring system 1000 downloads the parameter according to the embodiment of the present invention. As shown in FIG. 5, when the pump apparatus 1 is in operation, the at least one parameter sensor 16 (In this embodiment, the at least one parameter sensor 16 are respectively the voltage sensor 160, the current sensor 161, the liquid temperature sensor 162, the gas flow sensor 163, the liquid flow sensor 164 and the pressure sensor 165) senses the at least one parameter of the pump apparatus 1 as being in operation (In this embodiment, the at least one parameter are the voltage, the current, the liquid temperature of the coolant, the flow rate of the coolant, the flow rate of the purge and the pressure of the gas as the pump apparatus 1 is in operation). Meanwhile, the apparatus control unit 152 of the control module 15 is able to store the at least one parameter in the apparatus storage unit 150.

When the operator is desired to utilize the near end electronic device 2 for transmitting the at least one parameter stored in the apparatus storage unit 150, an Application (APP) installed in the near end electronic device 2 is utilized for driving the near end wireless communication module 20 to establish the connection with the apparatus control unit 152 of the control module 15 of the pump apparatus 1. Accordingly, the apparatus control unit 152 is able to further control the apparatus wireless communication module 151 to transmit the at least one parameter stored in the apparatus storage unit 150 to the near end electronic device 2, and the near end control unit 23 of the near end electronic device 2 is able to control the near end wireless communication module 20 to receive the at least one parameter. In practical application, there might be no network 4 in the position where the pump apparatus 1 is disposed. As a result, the near end control unit 23 is further able to store the at least one parameter in the near end storage unit 22 when the near end wireless communication module 20 receives the at least one parameter, until the operator takes the near end electronic device 2 to the place where the network 4 is able to be accessed. By then, the near end electronic device 2 is able to be connected to the network 4, so that the near end control unit 23 controls the near end network module 21 to upload the at least one parameter to the cloud server 3 via the network 4. When the cloud server 3 receives the at least one parameter from the near end electronic device 2, the cloud server 3 can store the at least one parameter in the cloud storage unit 30.

As shown in FIG. 6, when the research/design staff who is in remote position is desired to download the at least one parameter stored in the cloud storage unit 30, the remote electronic device 5 is utilized for downloading the at least one parameter from the cloud server 3 via the network 4. Accordingly, the research/design staff in remote position is able to receive the parameters of the pump apparatus 1 which is in operation and located in the near end position immediately by the remote electronic device 5, so as to adjust the pump apparatus 1 in time. It should be noticed that the pump apparatus monitoring system 1000 of the present invention is allowed multiple research/design staff to download the parameter stored in the cloud storage unit 30, i.e., the present invention allows more than one remote electronic device 5 to download the at least one parameter from the cloud server 3 via the network 4 simultaneously. In this embodiment, the at least one remote electronic device 5 includes a first remote electronic device 50 and a second remote electronic device 51. An amount of the remote electronic device 5 is not limited to that illustrated in figures in this embodiment, and it depends on practical demands.

Compared to the prior art, the present invention utilizes the parameter sensor for sensing the at least one parameter of the pump apparatus and utilizes the control module to transmit the at least one parameter to the near end electronic device located near the pump apparatus. Furthermore, the present invention further utilizes the near end electronic device for uploading the at least one parameter to the cloud server via the network. Accordingly, staff located in remote position is able to receive the parameter of the pump apparatus as in operation by the remote electronic device, so as to adjust the pump apparatus immediately.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A pump apparatus (1) with remote monitoring function, comprising:
a rotor housing (10) with a pump chamber (101) formed therein;
an intake pipe (11) communicating with the pump chamber (101) and a chamber body (12);
an exhaust pipe (13) communicating with the pump chamber (101);
a pump rotor (14) disposed in the pump chamber (101), the pump rotor (14) inhaling a gas from the chamber body (12) into the pump chamber (101) via the intake pipe (11) and exhausting the gas inhaled into the pump chamber (101) to the exhaust pipe (13);
a control module (15) disposed on the rotor housing (10); and
at least one parameter sensor (16) coupled to the control module (15) and for sensing at least one parameter of the pump apparatus (1), wherein the control module (15) establishes connection with a near end electronic device (2) and transmits the at least one parameter to the near end electronic device (2).

2. The pump apparatus (1) of claim 1, further **characterized by**:
a liquid pipe (17) for providing a coolant; and
a gas pipe (18) for providing a purge.

3. The pump apparatus (1) of claims 1 or 2, **characterized in that** the at least one parameter sensor (16) comprises:
a voltage sensor (160) disposed in the control module (15) and for sensing a voltage of the pump apparatus (1);
a current sensor (161) disposed in the control module (15) and for sensing a current of the pump apparatus (1);
a liquid temperature sensor (162) disposed on the liquid pipe (17) and for sensing a liquid temperature of the coolant;
a gas flow sensor (163) disposed on the gas pipe (18) and for sensing a flow rate of the purge; and
a liquid flow sensor (164) disposed on the liquid pipe (17) and for sensing a flow rate of the coolant.

4. The pump apparatus (1) of claims 1, 2 or 3, **characterized in that** the control module (15) comprises:
an apparatus storage unit (150) for storing the at least one parameter sensed by the at least one parameter sensor (16); and
an apparatus wireless communication module (151) for establishing the connection with a near end wireless communication module (20) of the near end electronic device (2).

5. The pump apparatus (1) of claim 4, **characterized in that** the control module (15) further comprises:
an apparatus control unit (152) coupled to the apparatus storage unit (150) and the apparatus wireless communication module (151), the apparatus control unit (152) storing the at least one parameter in the apparatus storage unit (150), the apparatus control unit (152) further controlling the apparatus wireless communication module (151) to transmit the least one parameter stored in the apparatus storage unit (150) to the near end electronic device (2).

6. The pump apparatus (1) of claim 4, further **characterized by**:
a control module casing (19) for containing the control module (15), the apparatus wireless communication module (151) being disposed inside the control module casing (19).

7. The pump apparatus (1) of claim 6, further **characterized by**:
an user interface unit (1A) installed on the control module casing (19) and for displaying the at least one parameter.

8. The pump apparatus (1) of claim 1, further **characterized by**:
a base (1B);
an activating member (1C) disposed on the base (1B) and for outputting a torque; and
a transmission mechanism (1D) disposed on the base (1B) and for transmitting the torque output by the activating member (1C) to the pump rotor (14).

9. The pump apparatus (1) of claim 1, further **characterized by**:
a muffler (1E) connected to the exhaust pipe (13) and for muffling a noise generated by the gas as exhausted out of the pump chamber (101) via the exhaust pipe (13); and
a check valve (1F) connected to the muffler (1E) and for preventing the gas exhausted out of the pump chamber (101) from reflux.

10. A pump apparatus monitoring system (1000), comprising:
a cloud server (3);
at least one remote electronic device (5) capable of establishing connection with the cloud server (3) via a network (4);
a near end electronic device (2) capable of establishing connection with the cloud server (3) via the network (4); and
a pump apparatus (1), comprising:
at least one parameter sensor (16) for sensing at least one parameter of the pump apparatus (1); and
a control module (15) coupled to the at least one parameter sensor (16), the control module (15) transmitting the at least one parameter sensed by the at least one parameter sensor (16) to the near end electronic device (2), so that the near end electronic device (2) uploads the at least one parameter to the cloud server (3) via the network (4) and the at least one remote electronic device (5) downloads the at least one parameter from the cloud server (3) via the network (4).

11. The pump apparatus monitoring system (1000) of claim 10, **characterized in that** the near end electronic device (2) comprises a near end wireless communication module (20), and the control module (15) comprises:
an apparatus storage unit (150) for storing the at least one parameter sensed by the at least one parameter sensor (16); and
an apparatus wireless communication module (151) for establishing the connection with the near end wireless communication module (20) of the near end electronic device (2).

12. The pump apparatus monitoring system (1000) of claim 11, **characterized in that** the control module (15) further comprises:
an apparatus control unit (152) coupled to the apparatus storage unit (150) and the apparatus wireless communication module (151), the apparatus control unit (152) storing the at least one parameter in the apparatus storage unit (150), the apparatus control unit (152) further controlling the apparatus wireless communication module (151) to transmit the least one parameter stored in the apparatus storage unit (150) to the near end electronic device (2).

13. The pump apparatus monitoring system (1000) of claims 10, 11 or 12, **characterized in that** the at least one parameter sensor (16) comprises a voltage sensor (160), a current sensor (161), a liquid temperature sensor (162), a gas flow sensor (163) and a liquid flow sensor (164), and the pump apparatus (1) further comprises an user interface unit (1A) installed on a control module casing (19) and for displaying the at least one parameter.

14. The pump apparatus monitoring system (1000) of claims 10, 11 or 12, **characterized in that** the control module (15) comprises an apparatus wireless communication module (151), and the near end electronic device (2) comprises:
a near end wireless communication module (20) for establishing the connection with the apparatus wireless communication module (151);
a near end network module (21) for communicating with the network (4); and
a near end storage unit (22) for storing the at least one parameter; and
a near end control unit (23) coupled to the near end wireless communication module (20), the near end network module (21) and the near end storage unit (22), the near end control unit (23) controlling the near end wireless communication module (20) to receive the at least one parameter, the near end control unit (23) storing the at least one parameter in the near end storage unit (22), the near end control unit (23) controlling the near end network module (21) to upload the at least one parameter to the cloud server (3).

15. The pump apparatus monitoring system (1000) of claims 10, 11 or 12, **characterized in that** the cloud server (3) has a cloud storage unit (30) for storing the at least one parameter, the at least one remote electronic device (5) comprises a first remote electronic device (50) and a second remote electronic device (51), and the first remote electronic device (50) establishes the communication with the second remote electronic device (51) via the cloud server (3).
